# DEMANDE DE BREVET EUROPEEN

(11) **EP 1 094 589 A1**
(43) Date de publication de la demande: **25.04.2001**
(21) Numéro de dépôt: 00402853.6
(22) Date de dépôt: 16.10.2000
(51) Int. Cl.: H02J 7/00

(54) **Système de gestion de charge pour batterie d'accumulateurs électriques et notamment d'une batterie composée de cellules au lithium**

(30) Priorité: 21.10.1999 FR 9913121
(71) Demandeur: ALCATEL, 75008 Paris (FR)
(72) Inventeur: Capel, Antoine, 31120 Goyrans (FR)
(74) Mandataire: Smith, Bradford Lee

(57) **Abrégé**

Le système de gestion de charge pour batterie d'accumulateurs électriques rechargeables et notamment pour batterie au lithium, comportant des cellules (3) montées en série qui sont destinées à être reliées à une source d'énergie électrique commune (8).

Le système comporte des unités individuelles de gestion de charge (4) de cellule qui sont équipées chacune de moyens destinés, en fonctionnement, à être connectés à la source d'énergie pour prélever l'énergie nécessaire à la charge d'une cellule, ainsi que pour assurer seule l'ensemble des opérations de charge de cette cellule, à partir de l'énergie ainsi prélevée.

## Description

L'invention concerne un système de gestion de charge pour batterie d'accumulateurs électriques rechargeables et plus particulièrement pour batterie composée de cellules au lithium.

Les cellules de batterie rechargeable au lithium, de type lithium-ion et lithium-métal, ont des performances énergétiques et massiques nettement supérieures aux cellules rechargeables nickel-cadmium ou nickel-hydrogène. Toutefois, leur mise en oeuvre, pour des applications où une longue durée et une grande fiabilité sont recherchées, n'est pas totalement satisfaisante, en particulier en ce qui concerne la gestion de leur charge en Ampères-heures au fur et à mesure de leur exploitation.

En effet, ces cellules au lithium supportent moins bien les surcharges temporaires et permanentes que les cellules nickel-cadmium ou nickel-hydrogène où ces surcharges ne produisent pas de dégradation perceptible. Dans le cas de cellules lithium-carbone, il se produit un dégagement de carbonate, en cas de surcharge et celui-ci se dépose et ne peut se recombiner par la suite avec la matière active des cellules. Il y a donc une consommation de matière active à chaque surcharge et en conséquence une perte irréversible en capacité pour les cellules. Il y a donc un intérêt à réaliser la gestion des batteries composées de cellules au lithium d'une manière appropriée prenant en compte de cette caractéristique.

Pour des raisons pratiques et économiques, la gestion de charge d'une batterie est habituellement réalisée par une unité centrale de gestion qui contrôle le courant de charge fourni à l'ensemble des cellules constituant la batterie et notamment sa réduction en fin de charge. Des unités auxiliaires de gestion individuellement affectées aux cellules assurent un contrôle précis de fin de charge cellule par cellule.

La présente invention propose donc un système de charge pour batterie d'accumulateurs électriques et plus particulièrement pour batterie composée de cellules au lithium, destiné à optimiser la gestion des cellules, notamment en vue de conserver leur capacité dans le temps.

Le système de gestion de charge est donc destiné à être associé à une batterie d'accumulateurs électriques rechargeables composée d'une pluralité de cellules montées en série et à chacune desquelles sont associés des moyens prévus pour être connectés à une source commune d'énergie électrique et pour prélever l'énergie nécessaire à la charge de la cellule à laquelle ils sont associés.

Selon une caractéristique de l'invention ce système comprend des unités individuelles de gestion de charge de cellule incluant chacune les moyens permettant de prélever l'énergie nécessaire à la charge d'une des cellules, à partir de la source commune à laquelle ces moyens sont connectés, et des moyens permettant à l'unité d'assurer seule l'ensemble des opérations de charge pour ladite cellule, à partir de l'énergie fournie par les moyens de prélèvement comportés par cette unité.

Selon l'invention, un bus d'alimentation relie les agencements de connexion, desservant chacune des unités de gestion individuelle, à l'agencement de connexion de la source commune.

Selon l'invention, chaque unité de gestion de charge de cellule comporte des moyens chargés de fournir le courant nécessaire à la charge de la cellule à partir de l'énergie qu'ils prélèvent au niveau de la source, ce courant étant fonction de la tension présente aux bornes de la cellule et étant maintenu inférieur à une valeur qui correspond à une fraction prédéterminée de la capacité de la cellule.

L'invention propose aussi une batterie d'accumulateurs rechargeables, comprenant une pluralité de cellules en série, à chacune desquelles sont associés des moyens prévus pour être connectés à une source commune d'énergie électrique et pour prélever l'énergie nécessaire à la charge de la cellule à laquelle ils sont associés.

Selon une caractéristique de l'invention, cette batterie comporte système de gestion de charge comprenant un ensemble d'unités individuelles de gestion de charge de cellule, chaque unité incluant les moyens permettant de prélever l'énergie nécessaire à la charge d'une des cellules, à partir de la source commune à laquelle ces moyens sont connectés, et des moyens permettant à l'unité d'assurer seule l'ensemble des opérations de charge pour ladite cellule, à partir de l'énergie fournie par les moyens de prélèvement comportés par cette unité.

Selon l'invention, la batterie comporte des unités individuelles de gestion de charge de cellule et des cellules qui sont regroupées par modules comportant chacun une cellule et une unité de gestion de charge, par laquelle la cellule est individuellement alimentée, à partir d'un bus commun relié à la source et par l'intermédiaire d'agencements de connexion de source (9A) et de module (9B).

L'invention, ses caractéristiques et ses avantages sont précisés dans la description qui suit en liaison avec les figures évoquées ci-dessous.

La figure 1 présente un schéma synoptique d'un système de gestion de charge, pour batterie d'accumulateurs électriques, selon l'invention.

La figure 2 présente un schéma synoptique d'un module d'un système de gestion, tel que présenté sur la figure 1.

La figure 3 présente un schéma détaillé relatif à un exemple de module pour système de gestion, selon l'invention.

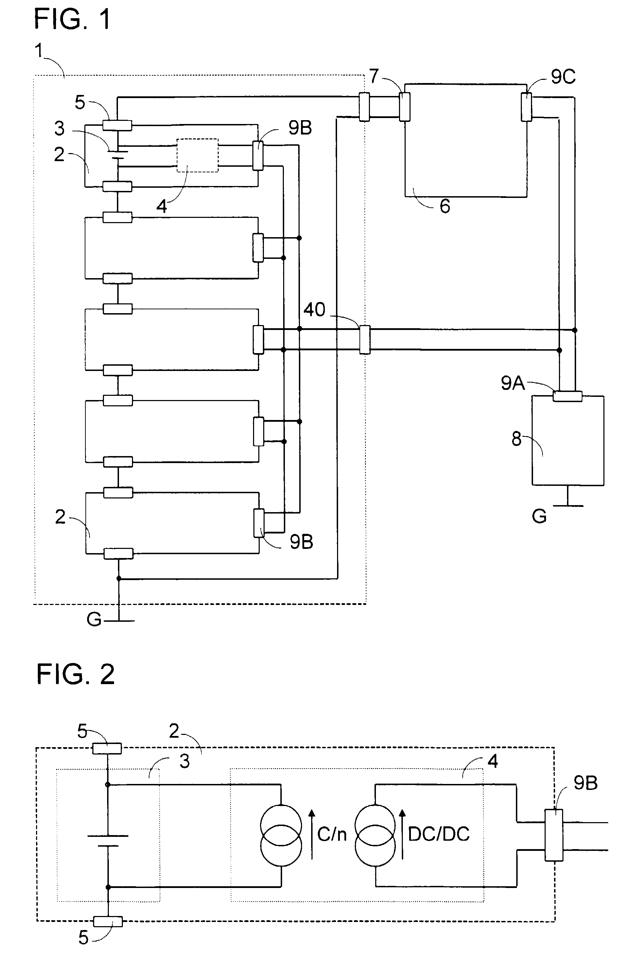

Le système de gestion de charge, pour batterie d'accumulateurs électriques, illustré sur la figure 1 est supposé destiné à desservir un ensemble 1 comportant une pluralité de modules 2 composés chacun d'une cellule, par exemple d'une cellule au lithium, et d'une unité de gestion individuelle de charge pour chacune des cellules.

Un exemple de module 2, comportant une cellule 3 et une unité de gestion individuelle 4, est illustré sur la figure 2.

Les modules 2 ont leurs cellules reliées en série entre elles par l'intermédiaire d'agencements de connexion 5, constitués par exemple chacun par un ensemble de deux connecteurs complémentaires dissociables Les deux agencements de connexion 5, situés aux extrémités de la batterie que constituent les cellules montées en série, sont respectivement reliés à un régulateur de décharge de batterie 6 par l'intermédiaire d'au moins un agencement de connexion 7. Un des agencements de connexion 5 situés aux extrémités de la batterie est classiquement mis à la terre par une connexion G, alors que l'autre est porté à un potentiel V par les cellules en série.

Le régulateur 6 est supposé alimenter un système utilisateur, non représenté ici. Dans l'exemple envisagé, ce régulateur est relié à une source d'énergie électrique 9 qui permet de fournir le courant de charge pour la batterie de cellules 3 de l'ensemble 1 et qui peut aussi alimenter le système utilisateur, si cela est prévu. La source 8 est ici supposée reliée à chacun des modules 2 ou plus précisément à l'unité de gestion individuelle de charge 4 de chacun de ces modules, par l'intermédiaire des agencements de connexion référencés 9A et 9B que comportent respectivement la source et chacun des modules. Ces agencements connus permettent classiquement un raccordement pour au moins deux conducteurs électriques différents. Un bus d'alimentation 0 relie les agencements de connexion 9B, desservant chacune des unités de gestion individuelle 4, à l'agencement de connexion 9A de la source 8.

Chaque unité de gestion individuelle 4 prélève individuellement au niveau de la source 8, l'énergie nécessaire à la charge de la cellule à laquelle elle est affectée. A cet effet, un circuit source de courant est incorporé dans chaque module 2 pour fournir le courant de charge nécessaire à la cellule 3, que comporte le module, à partir de la source 8 qui est commune.

Le courant de charge fourni à une cellule est susceptible de varier en intensité, cette intensité est ici supposée limitée à une fraction C/n de la capacité C de la cellule et par exemple au tiers de cette capacité C. La puissance nécessaire à la charge d'une cellule est supposée fournie par l'intermédiaire d'un convertisseur continu/continu DC/DC, qui prélève l'énergie au niveau d'un bus d'alimentation qui relie l'agencement de connexion 9A de la source aux agencements de connexion 9B de chacun des modules 2.

Dans la réalisation schématisée, la source 8 est aussi reliée au régulateur de décharge de batterie 6, par l'intermédiaire de leurs agencements de connexion respectifs 9A, 9C. L'énergie emmagasinée dans les cellules est supposée mise à disposition du système utilisateur par l'intermédiaire du régulateur 6, la tension étant supposée régulée à une valeur V0. Elle peut éventuellement être directement fournie au système utilisateur, si celui-ci est prévu pour travailler à une tension variable et notamment à la tension V présente aux bornes de la batterie constituée par les cellules 3.

Chaque cellule 3 se charge en fonction de l'énergie qu'est susceptible de fournir la source 8, soit à courant constant soit à courant variable, suivant les possibilités offertes, ce courant restant limité à la valeur C/n indiquée plus haut. La tension aux bornes de la cellule croît, jusqu'au moment où une valeur de seuil prédéterminée VSP fonction de la constitution de la cellule est atteinte, par exemple 4,0 volt par cellule. Cette valeur est alors maintenue par des moyens d'asservissement qui sont précisés plus loin et le courant circulant dans la cellule décroît exponentiellement vers zéro avec une constante de temps qui est propre à la cellule elle-même. Cette décroissance est rapide lorsque la cellule est chargée, elle varie avec le vieillissement de la cellule, au fur et à mesure que la structure interne de la cellule évolue. La cellule n'est, a priori, pas totalement rechargée à la tension VSP, la recharge se poursuit naturellement et progressivement selon le procédé connu classiquement désigné par le terme anglais "taperring".

Lorsqu'un courant de décharge apparaît du fait d'une demande en énergie au niveau du système utilisateur, il y a une inversion du sens du courant dans les cellules 3 que ce courant traverse en série et cette inversion est constatée par les moyens d'asservissement propres à chaque cellule qui interrompent alors le processus de charge.

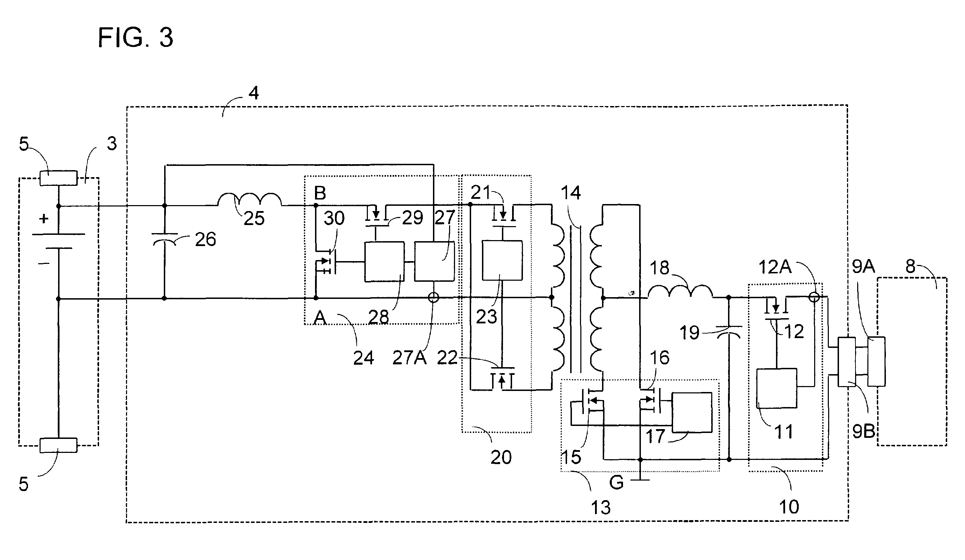

Un exemple de module pour système de gestion, selon l'invention, est illustré sur la figure 3, il comporte un circuit bidirectionnel en courant, du genre classiquement désigné par le terme anglais "buck". Ce circuit comporte un circuit générateur d'impulsions par l'intermédiaire duquel les impulsions produites sont modulées en largeur, c'est-à-dire en durée, ainsi qu'un étage de redressement et de filtrage. Un régulateur 10, de type série, opérant en interrupteur électronique et limiteur de courant et assurant une pré-régulation, est alimenté par la source 8 au travers de l'agencement de connexion 9B aux bornes duquel il est relié. Ce régulateur 10 est ici supposé comporter un circuit de commande 11 pilotant un commutateur de courant 12, de type à effet de champ, avec un senseur 12A, de manière à alimenter un montage 13, de type "push-pull", situé au primaire d'un transformateur 14. Le montage 13 comporte deux transistors 15 et 16, de type à effet de champ, qui sont pilotés de manière connue en soit par un circuit de commande 17. Chacun de ces transistors est relié par sa source à la terre G, et par son drain à l'une des extrémités du primaire du transformateur 14. Un point milieu du primaire du transformateur 14 est relié au commutateur de courant 12 du régulateur 10 par une inductance 18 associé à un condensateur 19 pour former un circuit LC de filtrage.

Le secondaire du transformateur 14 est associé à un étage de redressement synchrone et de filtrage, cet étage comporte un montage 20, de type push-pull, comportant deux transistors 21 et 22, à effet de champ, pilotés par un circuit de commande 23 et qui sont reliés, d'une part, entre eux par leurs sources au niveau d'une sortie S et d'autre part, chacun à une extrémité du secondaire du transformateur 14, par son drain.

Ce montage 20 alimente un montage d'alimentation régulateur 24 qui est connecté aux bornes de la cellule 3, via un circuit LC composé d'une inductance 25 et d'un condensateur 26. Le montage 20 comporte un circuit de supervision de tension 27 et un senseur de mesure de courant 27A qui sont connectés aux bornes d'extrémité de la cellule 3 et qui sont associés à un circuit de commande 28 agissant sur deux transistors, à effet de champ, 29 et 30. Le transistor 29 est placé en série entre la sortie S du montage 20 et l'inductance 25 reliée à la borne positive de la cellule 3. Le transistor 30 est placé entre un point A commun à la source du transistor 29 et à l'inductance 25, et un point B relié à la borne négative de la cellule 3 et au point milieu du secondaire du transformateur 14.

Le montage régulateur 24 est prévu pour délivrer un courant i(t) au travers de l'inductance 25 sous une tension d'asservissement qui correspond la tension VSP, évoquée plus haut. Comme la cellule 3 qui reçoit ce courant, est un générateur de tension, elle impose sa tension au montage régulateur qui fournit un courant maximum à la cellule tant que celle-ci n'a pas atteint la tension d'asservissement.

Le courant fourni qui est mesuré par le senseur 27A est limité à une valeur maximale correspondant à une fraction n de la valeur de la capacité C de la cellule, comme indiqué plus haut, tant que la tension VSP n'est pas atteinte. A partir du moment où cette tension est atteinte, le courant fourni à la cellule est contrôlé de manière à décroître exponentiellement, la cellule continuant sa charge selon le procédé de "tappering" évoqué plus haut.

## Revendications

1. Système de gestion de charge pour batterie d'accumulateurs électriques rechargeables comportant une pluralité de cellules (3) montées en série à chacune desquelles sont associés des moyens prévus pour être connectés à une source commune (8) d'énergie électrique et pour prélever l'énergie nécessaire à la charge de la cellule à laquelle ils sont associés, caractérisé en ce qu'il comprend des unités individuelles (4) de gestion de charge de cellule incluant chacune les moyens permettant de prélever l'énergie nécessaire à la charge d'une des cellules, à partir de la source commune à laquelle ces moyens sont connectés, et des moyens permettant à l'unité d'assurer seule l'ensemble des opérations de charge pour ladite cellule, à partir de l'énergie fournie par les moyens de prélèvement comportés par cette unité.

2. Système, selon la revendication 1, dans lequel un bus d'alimentation (0) relie les agencements de connexion (9B), desservant chacun une des unités individuelles de gestion (4), à l'agencement de connexion (9A) de la source (8).

3. Système, selon l'une des revendications 1, 2, dans lequel chaque unité de gestion de charge de cellule comporte des moyens, de type circuit source de courant, chargés de fournir le courant nécessaire à la charge de la cellule à partir de l'énergie qu'ils prélèvent au niveau de la source, ce courant, mesuré par un senseur (27A), étant fonction de la tension présente aux bornes de la cellule et étant maintenu inférieur à une valeur qui correspond à une fraction prédéterminée de la capacité de la cellule.

4. Système, selon la revendication 3, dans lequel les moyens chargés de fournir le courant nécessaire à la charge de la cellule, à partir de l'énergie qu'ils prélèvent au niveau de la source, comportent un régulateur (10), opérant en interrupteur électronique limiteur de courant, qui est associé à un montage push-pull (13) constitué à l'aide de transistors, de type FET, et connecté au primaire d'un transformateur (14), pour prélever l'énergie au niveau de la source commune (8), ainsi qu'un montage d'alimentation régulateur (24), relié aux bornes (+, -) de la cellule auquel il fournit un courant continu obtenu, par redressement et filtrage, en fonction de la tension présente aux dites bornes et à partir du courant obtenu d'un montage (20), de type push-pull, connecté au secondaire du transformateur.

5. Batterie d'accumulateurs électriques rechargeables, comprenant une pluralité de cellules (3) montées en série, à chacune desquelles sont associés des moyens prévus pour être connectés à une source commune (8) d'énergie électrique et pour prélever l'énergie nécessaire à la charge de la cellule à laquelle ils sont associés, caractérisée en ce qu'elle comporte un système de gestion de charge comprenant un ensemble d'unités individuelles (4) de gestion de charge de cellule, chaque unité incluant les moyens permettant de prélever l'énergie nécessaire à la charge d'une des cellules, à partir de la source commune à laquelle ces moyens sont connectés, et des moyens permettant à l'unité d'assurer seule l'ensemble des opérations de charge pour ladite cellule, à partir de l'énergie fournie par les moyens de prélèvement comportés par cette unité.

6. Batterie d'accumulateurs électriques, selon la revendication 5, dans laquelle les unités individuelles (4) de gestion de charge de cellule et les cellules (3) sont regroupées par modules (2) comportant chacun une cellule et une unité de gestion de charge, par laquelle la cellule est individuellement alimentée, à partir d'un bus commun relié à la source (8) et par l'intermédiaire d'agencements de connexion de source (9A) et de module (9B).
